# EUROPEAN PATENT SPECIFICATION

(11) **EP 4 564 949 B1**
(45) Date of publication and mention of the grant of the patent: **12.08.2026**
(21) Application number: 22952202.4
(22) Date of filing: 25.07.2022
(51) Int. Cl.: H04W 4/38, H04W 24/10, G01S 7/00, G01S 13/76, H04W 84/12

(54) **COMMUNICATION METHOD, ELECTRONIC DEVICE AND STORAGE MEDIUM**
KOMMUNIKATIONSVERFAHREN, ELEKTRONISCHE VORRICHTUNG UND SPEICHERMEDIUM
PROCÉDÉ DE COMMUNICATION, DISPOSITIF ÉLECTRONIQUE ET SUPPORT DE STOCKAGE

(43) Date of publication of application: 04.06.2025
(73) Proprietor: Beijing Xiaomi Mobile Software Co., Ltd., Beijing 100085 (CN)
(72) Inventor: DONG, Xiandong, Beijing 100085 (CN)
(74) Representative: Dehns Germany Partnerschaft mbB
(86) International application number: PCT/CN2022/107670
(87) International publication number: WO 2024/020735

(56) References cited:
- WO-A1-2021/033220
- CN-A- 101 945 015
- CN-A- 113 518 388
- CN-A- 114 666 829
- CN-A- 114 731 679

## Description

### TECHNICAL FIELD

The present disclosure relates to the field of mobile communication technology, in particular, to a communication method, an electronic device, and a storage medium.

### BACKGROUND

With the rapid development of mobile communication technology, wireless fidelity (Wi-Fi) technology has made tremendous progress in transmission speed and throughput. At present, the research on Wi-Fi technology includes, for example, transmission in the 320MHz bandwidth, aggregation and collaboration of multiple frequency bands, etc. Main application scenarios for Wi-Fi technology include, for example, video transmission, augmented reality (AR), virtual reality (VR), etc.

Specifically, the aggregation and collaboration of multiple frequency bands refers to the simultaneous communication between devices in 2.4GHz, 5.8GHz, 6GHz, and other frequency bands. For scenarios where devices communicate simultaneously in multiple frequency bands, a new media access control (MAC) mechanism needs to be defined for managing the communication. In addition, the aggregation and collaboration of multiple frequency bands are expected to support low latency transmission.

At present, the maximum bandwidth supported in the aggregation and collaboration of multiple frequency bands is 320MHz (160MHz+160MHz). In addition, 240MHz (160MHz+80MHz) and other bandwidths supported by the existing standard may also be supported.

In the current research on Wi-Fi technologies, the wireless local area network (WLAN) sensing technology may be supported, and some application scenarios are, for example, location discovery, proximity detection, and presence detection in dense environments such as home and business environments. In the process of the WLAN sensing, the identities of a station (STA) and an access point (AP) can usually be exchanged. For example, the STA and the AP can both serve as sensing initiators or sensing transmitters. When serving as a sensing initiator or a sensing transmitter, the AP can communicate with multiple STAs simultaneously, but the STA does not have such functionality and can only communicate with a single responder (sensing responder) in one-to-one manner, which not only wastes spectrum resources, but also increases latency. For those communication scenarios where latency is critical, this may not be able to meet the latency requirements. To address the issue, an optional WLAN sensing process, where the AP performs the WLAN sensing measurement on behalf of the STA, namely sensing by proxy (SBP), has been proposed. The SBP initiator sends an SBP request to the SBP responder to initiate the SBP process. However, the sending of the SBP request is blind, and it is possible that the SBP responder that receives the SBP request cannot establish the SBP process, resulting in the SBP request becoming an invalid signaling message and wasting of signaling resources. Therefore, it is necessary to provide a solution to the problem to improve the SBP establishment mechanism.

CN 114666829 A discloses a method for performing wireless sensing measurement among multiple pieces of equipment. According to the method, a second device establishes a wireless sensing measurement process with a first device and a third device respectively. The second device sends a specific trigger message to the first device. After receiving the trigger message, the first device sends an NDPA message to the responder indicated in the trigger message, and then sends a sensing data packet to the responder indicated in the trigger message. After receiving the NDPA message sent by the first equipment, the responders receive a sensing data packet sent by the first equipment, and measure and obtain wireless channel information between the responders and the first equipment. The second device acquires wireless channel information measured by these responders. According to the method, the accuracy and the precision of the wireless sensing result are improved.

CN 114731679 A discloses a communication method for proxy awareness. According to the communication method, an access point device receives a first SBP request frame from an SBP request site device. The first SBP request frame includes a demand for requesting the access point device to initiate a first sensing measurement as a proxy access point device. The access point equipment sends a first message frame to the SBP request station equipment, and the first message frame carries a perception measurement establishment identifier.

### SUMMARY

Embodiments of the present invention provide a communication method, an electronic device, and a storage medium, to solve the problem of wasting of signaling resources due to SBP requests becoming invalid signaling messages.

In one aspect, embodiments of the present invention provide a communication method. The method is performed by a first sensing by proxy (SBP) responder, and includes:
determining a target radio frame, wherein the target radio frame includes target parameter information for establishing an SBP sensing measurement supported by an SBP responder, and the target parameter information includes a wireless local area network (WLAN) sensing measurement parameter supported by a station corresponding to the SBP responder; and
sending the target radio frame.

In another aspect, embodiments of the present invention provide a communication method. The method is performed by an SBP initiator, and includes:
receiving a target radio frame sent by a first SBP responder, wherein the target radio frame includes target parameter information for establishing an SBP sensing measurement supported by an SBP responder, and the target parameter information includes a wireless local area network (WLAN) sensing measurement parameter supported by a station corresponding to the SBP responder; and
initiating, based on the target parameter information, an SBP sensing measurement process with the SBP responder being as a proxy.

In another aspect, embodiments of the present invention provide an electronic device. The electronic device is a first sensing by proxy (SBP) responder, and includes:
a determination module configured to determine a target radio frame, wherein the target radio frame includes target parameter information for establishing an SBP sensing measurement supported by an SBP responder, and the target parameter information includes a wireless local area network (WLAN) sensing measurement parameter supported by a station corresponding to the SBP responder; and
a sending module configured to send the target radio frame.

In another aspect, embodiments of the present invention provide an electronic device. The electronic device is an SBP initiator, and includes:
a receiving module configured to receive a target radio frame sent by a first SBP responder, wherein the target radio frame includes target parameter information for establishing an SBP sensing measurement supported by an SBP responder, and the target parameter information includes a wireless local area network (WLAN) sensing measurement parameter supported by a station corresponding to the SBP responder; and
an execution module configured to initiate, based on the target parameter information, an SBP sensing measurement process with the SBP responder being as a proxy.

Embodiments of the present invention also provide an electronic device including a memory, a processor, and a computer program stored on the memory and executable by the processor, wherein the processor is configured to execute the computer program to implement one or more of the methods described in embodiments of the present invention.

Embodiments of the present invention also provide a computer-readable storage medium having a computer program stored thereon, which when executed by a processor, causes one or more of the methods described in embodiments of the present invention to be implemented.

According to embodiments of the present invention, the first SBP responder carries in the target radio frame the target parameter information for establishing the SBP sensing measurement supported by the SBP responder. The target parameter information includes the wireless local area network (WLAN) sensing measurement parameter supported by the station corresponding to the SBP responder, and the target radio frame is sent to the SBP initiator, so that after receiving the target radio frame, the SBP initiator can select the target SBP responder that meets the parameter requirements for the SBP sensing measurement, and send the SBP response frame to the target SBP responder, to establish a valid SBP sensing measurement, thereby avoiding the blind sending of the SBP response frame and avoiding the invalid SBP sensing measurement.

The additional aspects and advantages of embodiments of the present invention will be partially provided in the following description, which will become apparent from the following description or will be understood through practice of the present invention.

### BRIEF DESCRIPTION OF THE DRAWINGS

In order to provide a clearer explanation of technical solutions in embodiments of the present disclosure, a brief introduction to the drawings required in the description of embodiments of the present disclosure will be provided in the following. It is apparent that the drawings are only some of the embodiments of the present disclosure, and for those skilled in the art, other drawings can be obtained based on these drawings without creative efforts.
FIG. 1 is a flowchart of a communication method according to embodiments of the present disclosure;
FIG. 2 is a schematic diagram of an architecture of the WLAN sensing according to embodiments of the present disclosure;
FIG. 3 is a schematic diagram of an architecture of the WLAN sensing according to embodiments of the present disclosure;
FIG. 4 is a schematic diagram of an architecture of the WLAN sensing according to embodiments of the present disclosure;
FIG. 5 is a schematic diagram of a WLAN sensing process according to embodiments of the present disclosure;
FIG. 6 is a flowchart of a communication method according to embodiments of the present disclosure;
FIG. 7 is a flowchart of a communication method according to embodiments of the present disclosure;
FIG. 8 is a schematic diagram of a structure of an electronic device according to embodiments of the present disclosure;
FIG. 9 is a schematic diagram of a structure of an electronic device according to embodiments of the present disclosure; and
FIG. 10 is a schematic diagram of a structure of an electronic device according to embodiments of the present disclosure.

### DETAILED DESCRIPTION

The term "and/or" in embodiments of the present disclosure describes the association relationship between associated objects, indicating that there can be three kinds of relationships. A and/or B, for example, can indicate the presence of A alone, the presence of A and B simultaneously, and the presence of B alone. The character "/" generally indicates that associated objects have an "or" relationship between them.

The term "multiple" in embodiments of the present disclosure refers to two or more, other quantifiers are similar to this.

A detailed explanation of exemplary embodiments will be provided herein, with examples being illustrated in the drawings. The same reference numerals in different drawings represent the same or similar elements when the following description refers to the drawings, unless otherwise indicated. The implementations described in the following exemplary embodiments do not represent all implementations consistent with the present disclosure, instead, they are only examples of devices and methods consistent with some aspects of the present disclosure as detailed in the appended claims.

The terms used in embodiments of the present disclosure are for the purpose of description of specific embodiments only, and are not intended to limit the embodiments of the present disclosure. Singular forms such as "a", "said", and "the" used in embodiments of the present disclosure and the appended claims are also intended to include plural forms, unless other meanings are clearly indicated in the context. It should also be understood that the term "and/or" used in the present disclosure refers to and includes any or all possible combinations of one or more listed items related.

It should be understood that although terms such as first, second, and third may be used to describe various information in embodiments of the present disclosure, such information should not be limited to these terms, which are only used to distinguish information about the same type from each other. For example, without departing from the scope of the present disclosure, the first information can also be referred to as the second information, and similarly, the second information can also be referred to as the first information. The word "if" used herein can be interpreted as "when" or "while" or "in response to determination that", depending on the context.

A clear and complete description of technical solutions disclosed in the embodiments of the present disclosure will be provided in the following, in conjunction with the drawings. Obviously, the embodiments described are only a part of disclosed embodiments of the present disclosure and not all of them. Based on the embodiments of the present disclosure, all other embodiments obtained by those of ordinary skill in the art without creative efforts fall within the protection scope of the present disclosure.

Embodiments of the present disclosure provide a communication method, an electronic device, and a storage medium, to solve the problem of wasting of signaling resources due to SBP requests becoming invalid signaling messages.

In some embodiments, the method and the apparatus are based on the same inventive concept. Due to the similar principles of solving problems by the method and by the apparatus, reference can be made between embodiments of the apparatus and the method, and the same will not be repeated.

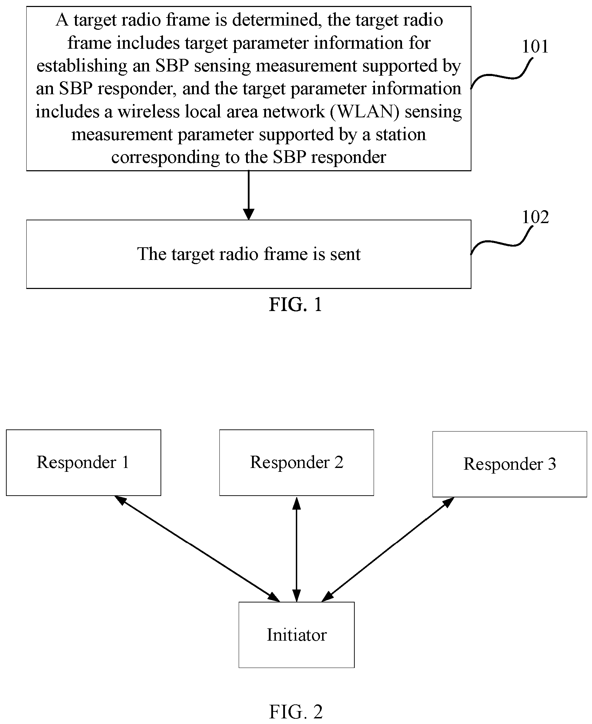

As shown in FIG. 1, embodiments of the present disclosure provide a communication method. The method can be performed by a first sensing by proxy (SBP) responder, for example, an access point (AP). The method can include following steps.

In step 101, a target radio frame is determined. The target radio frame includes target parameter information for establishing an SBP sensing measurement supported by an SBP responder. The target parameter information includes a wireless local area network (WLAN) sensing measurement parameter supported by a station corresponding to the SBP responder.

Reference is made to FIGS. 2 to 4, where the WLAN sensing architecture and the WLAN sensing process to which the SBP method provided in embodiments of the present disclosure is applied are first introduced.

FIG. 2 shows a schematic diagram of an architecture of the WLAN sensing (process). In some embodiments, when a sensing initiator (or an initiator, i.e., a requesting STA) initiates the WLAN sensing (e.g., initiating a WLAN sensing session), multiple sensing responders (or sensing receivers) or responders may respond to the WLAN sensing, as is shown by Responder 1, Responder 2, and Responder 3 in FIG. 2. When the sensing initiator initiates the WLAN sensing, multiple sensing responders associated or not associated with the WLAN sensing can respond.

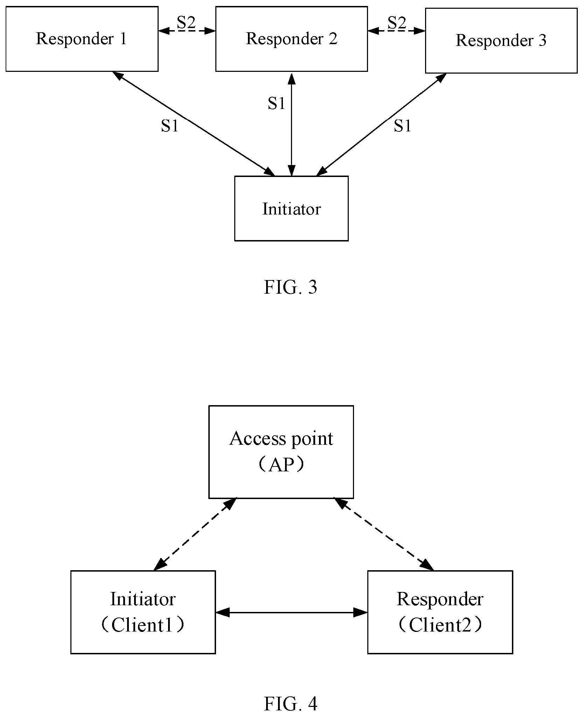

As shown in FIG. 3, the sensing initiator communicates with the sensing responder through a link, as shown by a link S1, and the communication between the sensing responders is carried out through a link S2.

In some embodiments, each sensing initiator can be a client, and each sensing responder (for example, the sensing Responder 1 to the sensing Responder 3) can be a station (STA) or an access point (AP). The STA and the AP can assume multiple roles in the WLAN sensing process. For example, in the WLAN sensing process, the STA can also serve as the sensing initiator, and the sensing initiator may be a sensing transmitter, a sensing receiver, or both, or neither. In the WLAN sensing process, the sensing responder may also be a sensing transmitter, a sensing receiver, or both.

Another architecture is shown in FIG. 4, the sensing initiator and the sensing responder can be both clients, and the two can be connected to the same AP for communication. In FIG. 4, Client 1 is the sensing initiator and Client 2 is the sensing responder.

Usually, when serving as a sensing initiator or a sensing transmitter, the STA does not have the capacity to communicate with multiple receivers simultaneously, and thus a proxy device (such as an AP) is needed to perform the trigger based (TB) sensing measurement (Trigger Based Sounding) for the STA, to improve the efficiency of the sensing measurement.

During an SBP process, the SBP initiator sends an SBP request to the SBP responder to initiate the SBP process. However, the sending of the SBP request is blind, and it is possible that the SBP responder that receives the SBP request cannot establish the SBP process, resulting in the SBP request becoming an invalid signaling message. In some embodiments, the SBP initiator has parameter requirements for TB sensing measurement, for example, a number of sensing responders participating in the TB sensing measurement, a bandwidth for the sensing measurement, and a number of spatial streams (NSS) supported by the sensing measurement. The SBP initiator can carry these sensing measurement parameter information in an SBP request frame, to discover suitable SBP responders (AP) to establish the SBP sensing measurement. However, due to the blind sending of the SBP request frame, it is possible that the parameters fed back in the SBP response frame by the AP that receives the SBP request frame cannot meet the parameter requirements for the STA sensing measurement, which results in the SBP sensing measurement being not able to be established, and thus both the aforementioned SBP request frame and the SBP response frame become invalid signaling messages, reducing the efficiency of the SBP sensing measurement establishment. According to embodiments of the present disclosure, the first SBP responder determines the target radio frame, and includes in the target radio frame the target parameter information for establishing the SBP sensing measurement supported by the SBP responder. The target parameter information includes the WLAN sensing measurement parameter supported by the station within a coverage range of the SBP responder. That is, the first SBP responder notifies the SBP initiator in advance of the target parameter information for establishing the SBP sensing measurement supported by the SBP responder in the target radio frame. In this way, after receiving the target radio frame, the SBP initiator can select, based on the target parameter information included in the target radio frame, the SBP responder that meets the parameter requirements for the SBP sensing measurement as the target SBP responder, and send an SBP response frame to the target SBP responder to avoid blind sending of the SBP response frame.

In some embodiments, the target radio frame can include, for example, an association response frame or a re-association response frame. The target parameter information includes the WLAN sensing measurement parameter supported by the STA within the coverage range of the SBP responder, such as a number of STAs (sensing responders) supporting the sensing measurement, a minimum bandwidth for the sensing measurement, a minimum number of spatial streams (NSS) supported by the sensing measurement (receiving Rx and transmitting Tx), and other parameter information, which can be identified in the form of an information element, as shown in Table 1 below.

**Table 1**

| | | | |
|---|---|---|---|
| Number of STA | Minimum BW | Minimum of NSS (Rx) | Minimum of NSS (Tx) |

The first SBP responder can broadcast the parameter information supported by each STA sensing measurement, and can carry identification of the STA, such as an association identifier (AID) or a Media Access Control (MAC) address.

In step 102, the target radio frame is sent.

The first SBP responder sends the target radio frame to the SBP initiator. After receiving the target radio frame, the SBP initiator selects, based on the target parameter information included in the target radio frame, the target SBP responder that meets the parameter requirements for the SBP sensing measurement, and initiates the SBP sensing measurement. The target SBP responder initiates the TB sensing measurement as a proxy of the SBP initiator.

In some embodiments, the SBP responder acts as an SBP proxy to initiate the WLAN sensing measurement, and the initiated WLAN sensing measurement is the TB sensing measurement. The TB sensing measurement includes Null Data Packet Announcement (NDPA) sounding (downlink (DL)) sensing measurement and trigger frame sounding (uplink (UL)) sensing measurement processes.

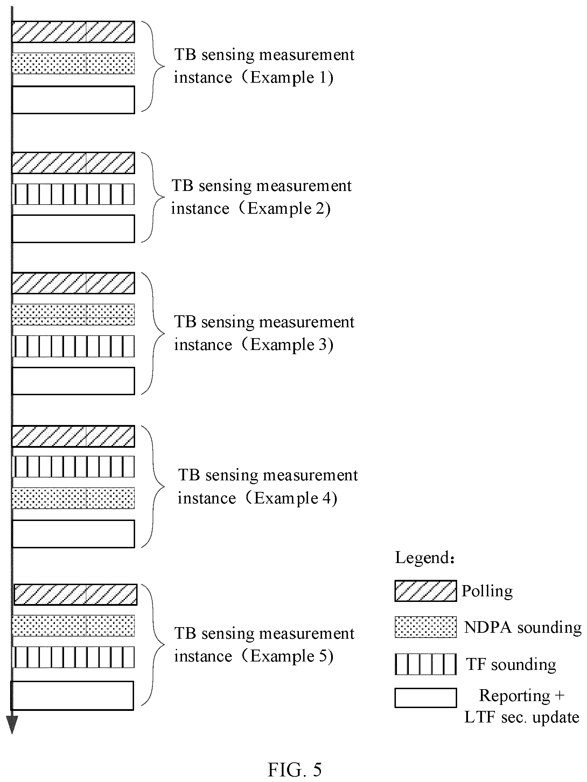

The WLAN sensing process usually includes both trigger based (TB) sounding and non-TB sounding. In some embodiments, for the TB sounding, the AP acts as the initiator or the transmitter, and for the non-TB sounding, the STA acts as the initiator or the transmitter. In some other embodiments, the TB sensing measurement process can also be as shown in FIG. 5, which illustrates multiple sensing measurement instances of the sensing measurement in the TB sensing measurement process. In some embodiments, in Example 1 to Example 5, the sensing measurement process each includes polling, sounding, and reporting (Reporting + LTF sec. update). In some embodiments, in each example, the sounding may include only NDPA sounding or TF sounding. The sounding may also include both NDPA sounding and TF sounding, and the SBP initiator may participate in the NDPA sounding process.

According to embodiments of the present disclosure, the first SBP responder carries in the target radio frame the target parameter information for establishing the SBP sensing measurement supported by the SBP responder. The target parameter information includes the wireless local area network (WLAN) sensing measurement parameter supported by the station corresponding to the SBP responder, and the target radio frame is sent to the SBP initiator, so that after receiving the target radio frame, the SBP initiator can select the target SBP responder that meets the parameter requirements for the SBP sensing measurement, and send the SBP response frame to the target SBP responder, to establish a valid SBP sensing measurement, thereby avoiding the blind sending of the SBP response frame and avoiding the invalid SBP sensing measurement.

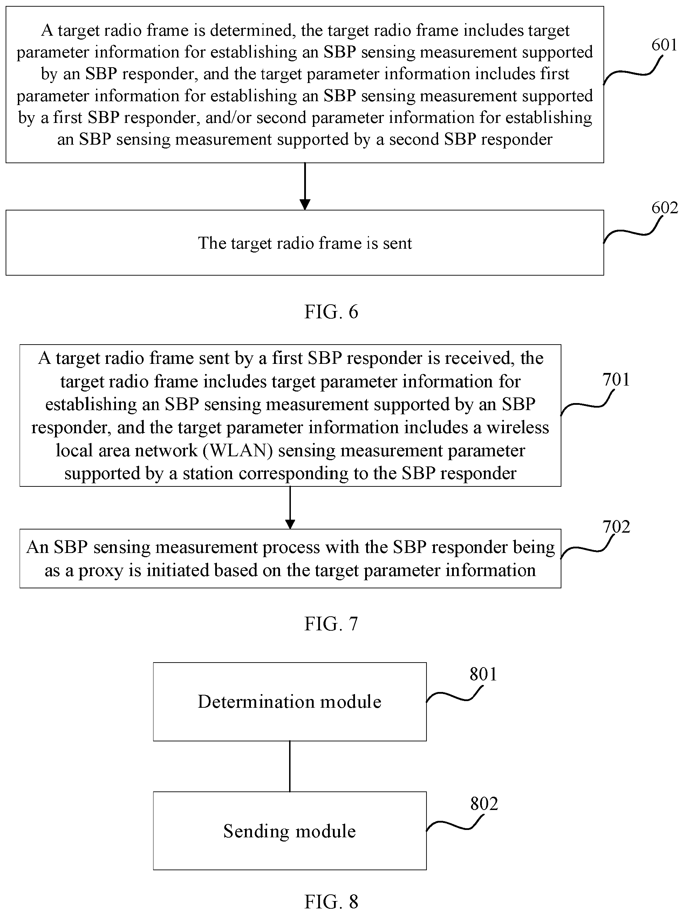

As shown in FIG. 6, embodiments of the present disclosure provide a communication method. The method can be performed by a first sensing by proxy (SBP) responder, for example, an access point (AP). The method can include following steps.

In step 601, a target radio frame is determined. The target radio frame includes target parameter information for establishing an SBP sensing measurement supported by an SBP responder. The target parameter information includes first parameter information for establishing an SBP sensing measurement supported by a first SBP responder, and/or second parameter information for establishing an SBP sensing measurement supported by a second SBP responder. The target parameter information includes a wireless local area network (WLAN) sensing measurement parameter supported by a station corresponding to the SBP responder.

In step 602, the target radio frame is sent.

In some embodiments, the second SBP responder is the SBP responder within the coverage range of the first SBP responder. In the target radio frame sent by the first SBP responder, the parameter information for establishing the SBP sensing measurement supported by the first SBP responder and/or the second SBP responder are/is included. In this way, the parameter information for establishing the SBP sensing measurement supported by multiple SBP responders can be notified to the SBP initiator by sending the target radio frame through one SBP responder, without the need of sending the target radio frame by each SBP responder, thereby saving the signaling messages.

Embodiments of the present disclosure provide a communication method. The method can be performed by a first sensing by proxy (SBP) responder, for example, an access point (AP). The method can include following steps.

In some embodiments, a first radio frame is sent to the second SBP responder. The first radio frame indicates to the second SBP responder to feed back the second parameter information for establishing the SBP sensing measurement supported by the second SBP responder. In some embodiments, the second SBP responder is the SBP responder within the coverage range of the first SBP responder.

In some embodiments, the second parameter information fed back by the second SBP responder is received.

In some embodiments, a target radio frame is determined. The target radio frame includes target parameter information for establishing an SBP sensing measurement supported by an SBP responder. The target parameter information includes first parameter information for establishing the SBP sensing measurement supported by the first SBP responder, and/or the second parameter information. The target parameter information includes a wireless local area network (WLAN) sensing measurement parameter supported by a station corresponding to the SBP responder.

In some embodiments, the target radio frame is sent.

In some embodiments, in the case where the target parameter information includes the parameter information for establishing the SBP sensing measurement supported by the second SBP responder, the first SBP responder broadcasts a second message frame to multiple second SBP responders within its coverage range, and actively inquires about the second parameter information of the second SBP responder. The first SBP responder receives the feedback from the second SBP responder, and carries the second parameter information fed back by the second SBP responder in the target radio frame to send to the SBP initiator.

Embodiments of the present disclosure provide a communication method. The method can be performed by a first sensing by proxy (SBP) responder, for example, an access point (AP). The method can include following steps.

In some embodiments, a second radio frame sent by the second SBP responder is received, and second parameter information included in the second radio frame is obtained. The second parameter information includes the parameter information for establishing the SBP sensing measurement supported by the second SBP responder.

In some embodiments, a target radio frame is determined. The target radio frame includes target parameter information for establishing an SBP sensing measurement supported by an SBP responder. The target parameter information includes first parameter information for establishing an SBP sensing measurement supported by a first SBP responder, and/or the second parameter information. The target parameter information includes a wireless local area network (WLAN) sensing measurement parameter supported by a station corresponding to the SBP responder.

In some embodiments, the target radio frame is sent.

In some embodiments, in the case where the target parameter information includes the parameter information for establishing the SBP sensing measurement supported by the second SBP responder, multiple second SBP responders within the coverage range of the first SBP responder can actively send the second parameter information to the first SBP responder. The first SBP responder receives the feedback from the second SBP responder and carries the second parameter information fed back by the second SBP responder in the target radio frame to send to the SBP initiator.

In some embodiments of the present disclosure, the station includes an association device associated with the SBP responder and a non-association device which completes Pre-Association Security Negotiation (PASN) with the SBP responder. That is, the station(s) corresponding to the first SBP responder and/or the second SBP responder include(s) the association device of the SBP responder (the association means that the communication connection has been established), and the non-association device, which is the device that has not established the communication connection with the SBP responder.

Embodiments of the present disclosure provide a communication method. The method can be performed by a first sensing by proxy (SBP) responder, for example, an access point (AP). The method can include following steps.

In some embodiments, in the case where the Pre-Association Security Negotiation with the non-association device (station) has been completed, the SBP responder carries the WLAN sensing measurement parameter supported by the non-association device in the target radio frame.

In some embodiments, the target radio frame is sent.

In some embodiments, for the non-association device which has not established an initial association with the SBP responder, after the PASN process is completed, the first SBP responder includes the WLAN sensing measurement parameter supported by the non-association device in the target radio frame, and broadcasts the target radio frame, so that the SBP initiator can obtain the WLAN sensing measurement parameter.

Embodiments of the present disclosure provide a communication method. The method can be performed by a first sensing by proxy (SBP) responder, for example, an access point (AP). The method can include following steps.

In some embodiments, in the case where the Pre-Association Security Negotiation with the non-association device (station) has been completed, the SBP responder receives a third radio frame sent by the SBP initiator, the third radio frame indicating to obtain the WLAN sensing measurement parameter supported by the non-association device.

In some embodiments, the WLAN sensing measurement parameter supported by the non-association device is included in the target radio frame, and the target radio frame is sent.

In some embodiments, for the non-association device which has not established an initial association with the SBP responder, after the PASN process is completed, the SBP initiator can actively inquire about the WLAN sensing measurement parameter supported by the non-association device by sending the third radio frame. The first SBP responder carries the WLAN sensing measurement parameter supported by the non-association device in the target radio frame, so that the SBP initiator can obtain the WLAN sensing measurement parameter.

In some embodiments, the method further includes following steps: including a first identification bit in a beacon frame or in a probe response frame, and the first identification bit is configured to indicate that the first SBP responder supports the SBP sensing measurement, and/or including a second identification bit in an association response frame, and the second identification bit is configured to indicate parameter information of the SBP sensing measurement supported by the first SBP responder included in the beacon frame or in the probe response frame.

In some embodiments, the AP (SBP responder) can carry the first identification bit in the beacon frame or in the probe response frame to indicate that it supports the SBP sensing measurement. The first identifier can occupy one bit, for example, a bit value "1" indicates that the AP supports the SBP sensing measurement.

In some embodiments, the AP (SBP responder) can also carry the second identification bit in the association response frame, which indicates that the parameter information of the SBP sensing measurement supported by the first SBP responder carried in the beacon frame or in the probe response frame. The first identification bit can occupy one bit, for example, a bit value "1" indicates that the parameter information of the supported SBP sensing measurement is carried.

According to embodiments of the present disclosure, the first SBP responder carries in the target radio frame the target parameter information for establishing the SBP sensing measurement supported by the SBP responder. The target parameter information includes the wireless local area network (WLAN) sensing measurement parameter supported by the station corresponding to the SBP responder, and the target radio frame is sent to the SBP initiator, so that after receiving the target radio frame, the SBP initiator can select the target SBP responder that meets the parameter requirements for the SBP sensing measurement, and send the SBP response frame to the target SBP responder, to establish a valid SBP sensing measurement, thereby avoiding the blind sending of the SBP response frame and avoiding the invalid SBP sensing measurement.

As shown in FIG. 7, embodiments of the present disclosure provide a communication method. The method can be performed by a sensing by proxy (SBP) initiator. The network device can be a station (STA), and the method can include following steps.

In step 701, a target radio frame sent by a first SBP responder is received. The target radio frame includes target parameter information for establishing an SBP sensing measurement supported by an SBP responder. The target parameter information includes a wireless local area network (WLAN) sensing measurement parameter supported by a station corresponding to the SBP responder.

The WLAN sensing architecture and the WLAN sensing process to which the method provided in embodiments of the present disclosure is applied can refer to the embodiments mentioned in the above and will not be repeated here.

Usually, when serving as a sensing initiator or a sensing transmitter, the STA does not have the capacity to communicate with multiple receivers simultaneously, and thus a proxy device (such as an AP) is needed to perform the trigger based (TB) sensing measurement (Trigger Based Sounding) for the STA, to improve the efficiency of the sensing measurement.

During an SBP process, the SBP initiator sends an SBP request to the SBP responder to initiate the SBP process. However, the sending of the SBP request is blind, and it is possible that the SBP responder that receives the SBP request cannot establish the SBP process, resulting in the SBP request becoming an invalid signaling message. In some embodiments, the SBP initiator has parameter requirements for TB sensing measurement, for example, a number of sensing responders participating in the TB sensing measurement, a bandwidth for the sensing measurement, and a number of spatial streams (NSS) supported by the sensing measurement. The SBP initiator can carry these sensing measurement parameter information in an SBP request frame, to discover suitable SBP responders (AP) to establish the SBP sensing measurement. However, due to the blind sending of the SBP request frame, it is possible that the parameters fed back in the SBP response frame by the AP that receives the SBP request frame cannot meet the parameter requirements for the STA sensing measurement, which results in the SBP sensing measurement being not able to be established, and thus both the aforementioned SBP request frame and the SBP response frame become invalid signaling messages, reducing the efficiency of the SBP sensing measurement establishment. According to embodiments of the present disclosure, the SBP initiator receives the target radio frame sent by the first SBP responder, and obtains the target parameter information for establishing the SBP sensing measurement supported by the SBP responder included in the target radio frame. The target parameter information includes the WLAN sensing measurement parameter supported by the station within a coverage range of the SBP responder. That is, the first SBP responder notifies the SBP initiator in advance of the target parameter information for establishing of the SBP sensing measurement supported by the SBP responder in the target radio frame. In this way, after receiving the target radio frame, the SBP initiator can select, based on the target parameter information included in the target radio frame, the SBP responder that meets the parameter requirements for the SBP sensing measurement as the target SBP responder, and send an SBP response frame to the target SBP responder to avoid blind sending of the SBP response frame.

In some embodiments, the target radio frame can include, for example, an association response frame or a re-association response frame. The target parameter information includes the WLAN sensing measurement parameter supported by the STA within the coverage range of the SBP responder, such as a number of STAs (sensing responders) supporting the sensing measurement, a minimum bandwidth for the sensing measurement, a minimum number of spatial streams (NSS) supported by the sensing measurement (receiving Rx and transmitting Tx), and other parameter information, which can be identified in the form of an information element, as shown in Table 1 below.

**Table 1**

| | | | |
|---|---|---|---|
| Number of STA | Minimum BW | Minimum of NSS (Rx) | Minimum of NSS (Tx) |

The first SBP responder can broadcast the parameter information supported by each STA sensing measurement, and can carry identification of the STA, such as an association identifier (AID) or a Media Access Control (MAC) address.

In step 702, an SBP sensing measurement process with the SBP responder being as a proxy is initiated based on the target parameter information.

After receiving the target radio frame, the SBP initiator selects, based on the target parameter information included in the target radio frame, the target SBP responder that meets the parameter requirements for the SBP sensing measurement, and initiates the SBP sensing measurement. The target SBP responder initiates the TB sensing measurement as a proxy of the SBP initiator. The TB sensing measurement process has been described in the above embodiments and will not be repeated here.

According to embodiments of the present disclosure, the SBP initiator receives the target radio frame and obtains the target parameter information for establishing the SBP sensing measurement supported by the SBP responder included in the target radio frame. The SBP sensing measurement process with the SBP responder being as the proxy is initiated based on the target parameter information. After receiving the target radio frame, the SBP initiator can select the target SBP responder that meets the parameter requirements for the SBP sensing measurement, and send the SBP response frame to the target SBP responder, to establish a valid SBP sensing measurement, thereby avoiding the blind sending of the SBP response frame and avoiding the invalid SBP sensing measurement.

In some embodiments, the target parameter information includes first parameter information for establishing of an SBP sensing measurement supported by a first SBP responder, and/or second parameter information for establishing an SBP sensing measurement supported by a second SBP responder.

In some embodiments, the second SBP responder is the SBP responder within the coverage range of the first SBP responder.

In some embodiments, the station includes an association device associated with the SBP responder and a non-association device which completes Pre-Association Security Negotiation (PASN) with the SBP responder.

In some embodiments, the method further includes following steps: in the case where the non-association device (station) has completed the Pre-Association Security Negotiation with the SBP responder, sending a third radio frame to the SBP responder. The third radio frame is configured to indicate to the SBP responder to carry the WLAN sensing measurement parameter supported by the non-association device in the target radio frame.

In some embodiments, for the non-association device which has not established an initial association with the SBP responder, after the PASN process is completed, the SBP initiator can send the third radio frame, to actively inquire about the WLAN sensing measurement parameter supported by the non-association device. The first SBP responder carries the WLAN sensing measurement parameter supported by the non-association device in the target radio frame, so that the SBP initiator can obtain the WLAN sensing measurement parameter.

In some embodiments, the method further includes following steps: including a third identification bit in an association request frame, and the third identification bit is configured to indicate that the SBP initiator supports the SBP sensing measurement.

In some embodiments, the STA (SBP initiator) can carry the third identification bit in the association request frame, which indicates that it supports the SBP sensing measurement. The third identification bit can occupy one bit, for example, a bit value "1" indicates that the STA supports the SBP sensing measurement.

According to embodiments of the present disclosure, the SBP initiator receives the target radio frame and obtains the target parameter information for establishing the SBP sensing measurement supported by the SBP responder included in the target radio frame. The SBP sensing measurement process with the SBP responder being as the proxy is initiated based on the target parameter information. After receiving the target radio frame, the SBP initiator can select the target SBP responder that meets the parameter requirements for the SBP sensing measurement, and send the SBP response frame to the target SBP responder, to establish a valid SBP sensing measurement, thereby avoiding the blind sending of the SBP response frame and avoiding the invalid SBP sensing measurement.

As shown in FIG. 8, based on the same principles as the methods provided in embodiments of the present disclosure, the present disclosure also provides an electronic device. The electronic device is a first SBP responder. The electronic device includes a determination module 801, and a sending module 802.

The determination module 801 is configured to determine a target radio frame. The target radio frame includes target parameter information for establishing an SBP sensing measurement supported by an SBP responder, and the target parameter information includes a wireless local area network (WLAN) sensing measurement parameter supported by a station corresponding to the SBP responder.

The sending module 802 is configured to send the target radio frame.

In some embodiments, the target parameter information includes first parameter information for establishing of an SBP sensing measurement supported by the first SBP responder, and/or second parameter information for establishing the SBP sensing measurement supported by a second SBP responder.

In some embodiments, the second SBP responder is an SBP responder within a coverage range of the first SBP responder.

In some embodiments, in the case where the target parameter information includes the parameter information for establishing the SBP sensing measurement supported by the second SBP responder, and before the target radio frame is sent, the method further includes: sending a first radio frame to the second SBP responder, with the first radio frame indicating to the second SBP responder to feed back the second parameter information, and receiving the second parameter information fed back by the second SBP responder; and/or receiving a second radio frame sent by the second SBP responder, and obtaining the second parameter information included in the second radio frame.

In some embodiments, the station includes an association device associated with the SBP responder, and a non-association device which completes Pre-Association Security Negotiation with the first SBP responder.

In some embodiments, the determination module 801 includes a first determination submodule or a second determination submodule.

The first determination submodule is configured to: in case that the non-association device completes the Pre-Association Security Negotiation with the first SBP responder, include the WLAN sensing measurement parameter supported by the non-association device in the target radio frame.

The second determination submodule is configured to: in case that the non-association device completes the Pre-Association Security Negotiation with the first SBP responder, receive a third radio frame sent by an SBP initiator, with the third radio frame indicating to obtain the WLAN sensing measurement parameter supported by the non-association device, and include the WLAN sensing measurement parameter supported by the non-association device in the target radio frame.

In some embodiments, the target radio frame includes an association response frame or a re-association response frame.

In some embodiments, the electronic device further includes a first processing module and/or a second processing module.

The first processing module is configured to include a first identification bit in a beacon frame or in a probe response frame. The first identification bit is configured to indicate that the first SBP responder supports the SBP sensing measurement.

The second processing module is configured to include a second identification bit in an association response frame. The second identification bit is configured to indicate parameter information of the SBP sensing measurement supported by the first SBP responder included in the beacon frame or in the probe response frame.

Embodiments of the present disclosure also provide a communication apparatus. The communication apparatus is applied to the first SBP responder, and the apparatus includes a radio frame determination module, and a radio frame sending module.

The radio frame determination module is configured to determine the target radio frame. The target radio frame includes target parameter information for establishing an SBP sensing measurement supported by an SBP responder, and the target parameter information includes a wireless local area network (WLAN) sensing measurement parameter supported by a station corresponding to the SBP responder.

The radio frame sending module is configured to send the target radio frame.

The apparatus further includes other modules of the electronic device in embodiments described in the above, which will not be repeated here.

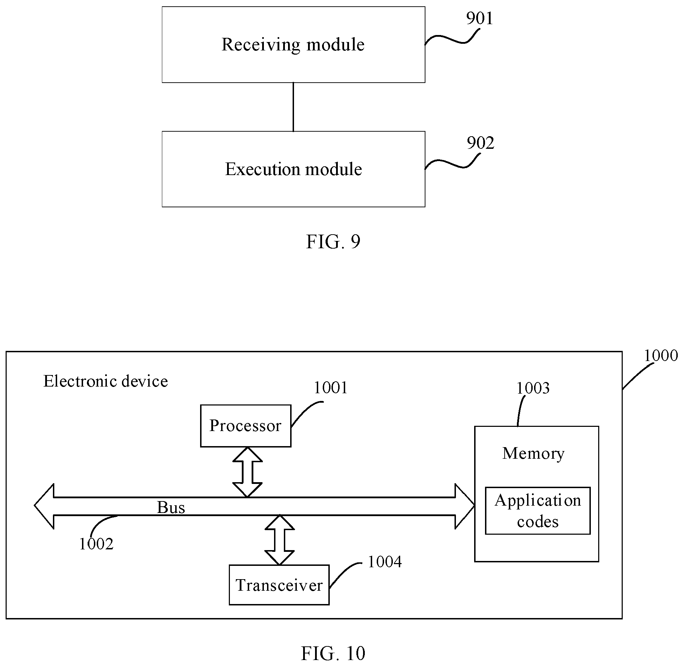

As shown in FIG. 9, based on the same principles as the methods provided in embodiments of the present disclosure, the present disclosure also provides an electronic device. The electronic device is an SBP initiator. The electronic device includes a receiving module 901, and an execution module 902.

The receiving module 901 is configured to receive a target radio frame sent by a first SBP responder. The target radio frame includes target parameter information for establishing an SBP sensing measurement supported by an SBP responder, and the target parameter information includes a wireless local area network (WLAN) sensing measurement parameter supported by a station corresponding to the SBP responder.

The execution module 902 is configured to initiate, based on the target parameter information, an SBP sensing measurement process with the SBP responder being as a proxy.

In some embodiments, the target parameter information includes first parameter information for establishing an SBP sensing measurement supported by the first SBP responder, and/or second parameter information for establishing an SBP sensing measurement supported by a second SBP responder.

In some embodiments, the second SBP responder is an SBP responder within a coverage range of the first SBP responder.

In some embodiments, the station includes an association device associated with the SBP responder, and a non-association device which completes Pre-Association Security Negotiation with the first SBP responder.

In some embodiments, the electronic device further includes a third processing module.

The third processing module is configured to: in case that the non-association device completes the Pre-Association Security Negotiation with the first SBP responder, send a third radio frame to the SBP responder, with the third radio frame being configured to indicate to the SBP responder to include the WLAN sensing measurement parameter supported by the non-association device in the target radio frame.

In some embodiments, the electronic device further includes a fourth processing module.

The fourth processing module is configured to include a third identification bit in an association request frame, with the third identification bit being configured to indicate that the SBP initiator supports the SBP sensing measurement.

Embodiments of the present disclosure also provide a communication apparatus. The communication apparatus is applied to the SBP initiator, and the apparatus includes a radio frame receiving module and an SBP execution module.

The radio frame receiving module is configured to receive the target radio frame sent by the first SBP responder. The target radio frame includes target parameter information for establishing an SBP sensing measurement supported by an SBP responder, and the target parameter information includes a wireless local area network (WLAN) sensing measurement parameter supported by a station corresponding to the SBP responder.

The SBP execution module is configured to initiate, based on the target parameter information, an SBP sensing measurement process with the SBP responder being as a proxy.

The apparatus further includes other modules of the electronic device in embodiments described in the above, which will not be repeated here.

In some embodiments, the present disclosure also provides an electronic device, as shown in FIG. 10. The electronic device 1000 shown in FIG. 10 can be a server, including a processor 1001 and a memory 1003. In some embodiments, the processor 1001 is connected to the memory 1003, for example, through a bus 1002. In some embodiments, the electronic device 1000 can further include a transceiver 1004. It should be noted that in practical applications, the transceiver 1004 is not limited to one transceiver, and a structure of the electronic device 1000 does not constitute a limitation to embodiments of the present disclosure.

The processor 1001 can be a CPU (Central Processing Unit), a general-purpose processor, a DSP (Digital Signal Processor), an ASIC (Application Specific Integrated Circuit), an FPGA (Field Programmable Gate Array), or other programmable logic devices, transistor logic devices, hardware components, or any combination thereof, which can implement or execute various exemplary logical blocks, modules, and circuits described in conjunction with the present disclosure. The processor 1001 can also be a combination of computing functions, such as a combination containing one or more microprocessors, a combination containing the DSP and the microprocessor, etc.

The bus 1002 can include a path for delivering information between the aforementioned components. The bus 1002 can be a PCI (Peripheral Component Interconnect) bus or an EISA (Extended Industry Standard Architecture) bus, etc. The bus 1002 can be divided into an address bus, a data bus, a control bus, etc. For ease of representation, only one thick line is used in FIG. 10, but it does not mean that there is only one bus or one type of bus.

The memory 1003 can be ROM (Read Only Memory) or other types of static storage devices that can store static information and instructions, RAM (Random Access Memory) or other types of dynamic storage devices that can store information and instructions, or EEPROM (Electrically Erasable Programmable Read Only Memory), CD-ROM (Compact Disc Read Only Memory), or other optical disk storage devices, optical disc storage devices (including compressed discs, laser discs, optical discs, digital universal discs, Blu-ray discs, etc.), magnetic disk storage media or other magnetic storage devices, or any other media that can be used to carry or store desired program codes in the form of instructions or data structures and can be accessed by computers, but not limited to this.

The memory 1003 is used to store application program codes for implementing the present disclosure, and the execution of the codes is controlled by the processor 1001. The processor 1001 is used to execute the application program codes stored in the memory 1003 to implement the methods provided in the aforementioned method embodiments.

In some embodiments, the electronic device includes but is not limited to mobile phones, laptops, digital broadcasting receivers, PDAs (Personal Digital Assistant), PADs (tablet), PMPs (Portable Multimedia Player), in-vehicle terminals (such as in-vehicle navigation terminals), and fixed terminals such as digital TVs, desktop computers, and so on. The electronic device shown in FIG. 10 is only an example and should not impose any limitations on the functionality and the use scope of embodiments of the present disclosure.

The server provided in the present disclosure can be an independent physical server, a server cluster or a distributed system composed of multiple physical servers, or a cloud server that provides basic cloud computing services such as cloud service, cloud database, cloud computing, cloud function, cloud storage, network service, cloud communication, middleware service, domain name service, security service, CDN, as well as big data and artificial intelligence platform. The terminal can be smartphone, tablet, laptop, desktop computer, smart speaker, smartwatch, etc., but is not limited to this. The terminal and the server can be directly or indirectly connected through wired or wireless communication methods, and the present disclosure is not limited here.

Embodiments of the present disclosure provide a computer-readable storage medium on which a computer program is stored. When the computer program is running on a computer, enables the computer to implement the corresponding content of the aforementioned method embodiments.

It should be understood that although the various steps in the flowchart in the drawings are displayed in sequence indicated by arrows, these steps are not necessarily executed in the order indicated by the arrows. Unless explicitly stated in the article, the execution of these steps does not have strict order restrictions and can be carried out in other orders. Moreover, at least a portion of the steps in the flowchart of the drawings can include multiple sub steps or stages, which may not necessarily be completed at the same time, but may be executed at different times, and their execution order may not necessarily be in sequence, but may rotate or alternate with at least a portion of other steps or sub steps or stages.

It should be noted that the computer-readable medium mentioned in the present disclosure can be a computer-readable signal medium, a computer-readable storage medium, or any combination of the two. The computer-readable storage medium can be, but is not limited to, an electrical, magnetic, optical, electromagnetic, infrared, or semiconductor system, apparatus, or device, or any combination thereof. More specific examples of the computer-readable storage medium can include, but are not limited to: electrical connections with one or more wires, portable computer disks, hard drives, random access memory (RAM), read-only memory (ROM), erasable programmable read-only memory (EPROM or flash), fiber optics, portable compact disk read-only memory (CD-ROM), optical storage devices, magnetic storage devices, or any suitable combination of the above. In the present disclosure, a computer-readable storage medium can be any tangible medium containing or storing a program, which can be used by an instruction execution system, apparatus, or device, or in combination with it. In the present disclosure, the computer-readable signal medium can include data signals propagated in the baseband or as part of the carrier wave, which carry computer-readable program codes. This type of transmitted data signal can take various forms, including but not limited to electromagnetic signals, optical signals, or any suitable combination of the above. The computer-readable signal medium can also be any computer-readable medium other than a computer-readable storage medium, which can send, propagate, or transmit programs for use by an instruction execution system, apparatus, or device, or in combination with it. The program code contained on computer-readable medium can be transmitted using any appropriate medium, including but not limited to: wires, optical cables, RF (radio frequency), etc., or any suitable combination of the above.

The above-mentioned computer-readable medium can be included in the electronic device mentioned above. It can also exist separately without being assembled into the electronic device.

The above-mentioned computer-readable medium carries one or more programs, which, when executed by the electronic device, cause the electronic device to implement the methods shown in the above embodiments.

According to one aspect of the present disclosure, a computer program product or computer program is provided, including computer instructions stored in a computer-readable storage medium. The processor of a computer device reads the computer instruction from the computer-readable storage medium, executes the computer instructions, and causes the computer device to implement the communication methods provided in the various embodiments mentioned above.

The computer program codes for implementing the operations disclosed herein can be written in one or more programming languages or combinations thereof, including object-oriented programming languages such as Java, Smalltalk, C++, and conventional procedural programming languages such as C or similar programming languages. The program codes can be completely executed on the user's computer, partially executed on the user's computer, executed as an independent software package, partially executed on the user's computer and partially executed on a remote computer, or completely executed on the remote computer or a server. In the case where remote computers are involved, the remote computer can be connected to the user computer through any type of networks, including local area networks (LAN) or wide area networks (WAN), or can be connected to an external computer (such as connected via the internet provided by internet service providers).

The flowchart and block diagram in the drawings illustrate the possible architectures, functions, and operations of the systems, methods, and computer program products according to various embodiments of the present disclosure. Each box in a flowchart or block diagram can represent a module, a program segment, or a part of codes that contain one or more executable instructions for implementing a specified logical function. It should also be noted that in some embodiments, the functions indicated in the box can also occur in a different order than those indicated in the drawings. For example, two consecutive boxes can actually be executed in basic parallel order, and sometimes they can also be executed in opposite order, depending on the functionality involved. It should also be noted that each box in the block diagram and/or flowchart, as well as the combination of boxes in the block diagram and/or flowchart, can be implemented using dedicated hardware based systems that perform specified functions or operations, or can be implemented using a combination of dedicated hardware and computer instructions.

The modules described in embodiments of the present disclosure can be implemented through software or hardware. In some embodiments, the name of the module does not constitute a limitation on the module itself in a certain situation. For example, module A can also be described as "module A used to perform operation B".

The above description is only for embodiments of the present disclosure and an explanation of the technical principles involved. The present disclosure is intended to cover any variations, uses, or adaptations of the present disclosure, which follow the general principles of the present disclosure and include common knowledge or commonly used technical means in the art that are not disclosed in the present disclosure. The scope of the invention is defined by the appended claims.

## Claims

1. A communication method, performed by a first sensing by proxy, SBP, responder, the method comprising:
determining (101) a target radio frame, wherein the target radio frame comprises target parameter information for establishing an SBP sensing measurement supported by at least the first SBP responder, and the target parameter information comprises a wireless local area network, WLAN, sensing measurement parameter supported by a station, STA, corresponding to at least the first SBP responder; and
sending (102) the target radio frame.

2. The communication method according to claim 1, wherein the target parameter information comprises first parameter information for establishing an SBP sensing measurement supported by the first SBP responder, and/or second parameter information for establishing an SBP sensing measurement supported by a second SBP responder, and
wherein the second SBP responder is an SBP responder within a coverage range of the first SBP responder.

3. The communication method according to claim 2,
wherein the method further comprises:
sending a first radio frame to the second SBP responder before sending the target radio frame, wherein the first radio frame indicates to the second SBP responder to feed back the second parameter information; and
receiving the second parameter information fed back by the second SBP responder;
and/or
wherein the method further comprises:
receiving a second radio frame sent by the second SBP responder before sending the target radio frame; and
obtaining the second parameter information comprised in the second radio frame.

4. The communication method according to any of claims 1 to 3, wherein the station comprises an association device associated with the first SBP responder, and a non-association device which completes Pre-Association Security Negotiation with the first SBP responder.

5. The communication method according to claim 4, wherein determining the target radio frame, comprises:
in case that the non-association device completes the Pre-Association Security Negotiation with the first SBP responder, comprising the WLAN sensing measurement parameter supported by the non-association device in the target radio frame;
or
wherein determining the target radio frame, comprises:
in case that the non-association device completes the Pre-Association Security Negotiation with the first SBP responder, receiving a third radio frame sent by an SBP initiator, wherein the third radio frame indicates to obtain the WLAN sensing measurement parameter supported by the non-association device; and
comprising the WLAN sensing measurement parameter supported by the non-association device in the target radio frame.

6. The communication method according to any of claims 1 to 5, wherein the target radio frame comprises an association response frame or a re-association response frame.

7. The communication method according to any of claims 1 to 6, further comprising:
comprising a first identification bit in a beacon frame or in a probe response frame, wherein the first identification bit is configured to indicate that the first SBP responder supports the SBP sensing measurement;
and/or
comprising a second identification bit in an association response frame, wherein the second identification bit is configured to indicate parameter information of the SBP sensing measurement supported by the first SBP responder carried in the beacon frame or in the probe response frame.

8. A communication method, performed by a sensing by proxy, SBP, initiator, the method comprising:
receiving (701) a target radio frame sent by a first SBP responder, wherein the target radio frame comprises target parameter information for establishing an SBP sensing measurement supported by at least the first SBP responder, and the target parameter information comprises a wireless local area network, WLAN, sensing measurement parameter supported by a station, STA, corresponding to at least the first SBP responder; and
initiating (702), based on the target parameter information, an SBP sensing measurement process with the SBP responder being as a proxy.

9. The communication method according to claim 8, wherein the target parameter information comprises first parameter information for establishing of an SBP sensing measurement supported by the first SBP responder, and/or second parameter information for establishing an SBP sensing measurement supported by a second SBP responder, and
wherein the second SBP responder is an SBP responder within a coverage range of the first SBP responder.

10. The communication method according to claim 8 or 9, wherein the station comprises an association device associated with the first SBP responder, and a non-association device which completes Pre-Association Security Negotiation with the first SBP responder.

11. The communication method according to claim 10, further comprising:
in case that the non-association device completes the Pre-Association Security Negotiation with the first SBP responder, sending a third radio frame to the first SBP responder, wherein the third radio frame is configured to indicate to the first SBP responder to comprise the WLAN sensing measurement parameter supported by the non-association device in the target radio frame.

12. The communication method according to any of claims 8 to 11, further comprising:
comprising a third identification bit in an association request frame, wherein the third identification bit is configured to indicate that the SBP initiator supports the SBP sensing measurement.

13. An electronic device, serving as a first sensing by proxy, SBP, responder, wherein the electronic device comprises a determination module (801) and a sending module (802), and wherein the electronic device is configured to perform the communication method according to any of claims 1 to 7.

14. An electronic device, serving as a sensing by proxy, SBP, initiator, wherein comprises a receiving module (901) and an execution module (902), and wherein the electronic device is configured to perform the communication method according to any of claims 8 to 12.

15. A non-transitory computer-readable storage medium having a computer program stored thereon, which when executed by a processor, causes the method according to any of claims 1 to 12 to be implemented.

## Patentansprüche

1. Kommunikationsverfahren, durchgeführt von einem ersten Sensing-by-Proxy-, SBP-, Responder, wobei das Verfahren umfasst:
Bestimmen (101) eines Ziel-Funkframes, wobei der Ziel-Funkframe Zielparameterinformationen zum Einrichten einer SBP-Sensormessung umfasst, die zumindest von dem ersten SBP-Responder unterstützt wird, und wobei die Zielparameterinformationen einen von einer Station, STA, unterstützten Sensormessparameter für ein drahtloses lokales Netzwerk, WLAN, umfassen, der zumindest dem ersten SBP-Responder entspricht; und
Senden (102) des Ziel-Funkframes.

2. Kommunikationsverfahren nach Anspruch 1, wobei die Zielparameterinformationen umfassen:
erste Parameterinformationen zum Einrichten einer SBP-Sensormessung, die von dem ersten SBP-Responder unterstützt wird, und/oder
zweite Parameterinformationen zum Einrichten einer SBP-Sensormessung, die von einem zweiten SBP-Responder unterstützt wird,
wobei der zweite SBP-Responder ein SBP-Responder innerhalb eines Abdeckungsbereichs des ersten SBP-Responders ist.

3. Kommunikationsverfahren nach Anspruch 2, wobei das Verfahren ferner umfasst:
Senden eines ersten Funkframes an den zweiten SBP-Responder vor dem Senden des Ziel-Funkframes, wobei der erste Funkframe den zweiten SBP-Responder anweist, die zweiten Parameterinformationen zurückzumelden; und
Empfangen der von dem zweiten SBP-Responder zurückgemeldeten zweiten Parameterinformationen;
und/oder
Empfangen eines von dem zweiten SBP-Responder gesendeten zweiten Funkframes vor dem Senden des Ziel-Funkframes; und
Erhalten der in dem zweiten Funkframe enthaltenen zweiten Parameterinformationen.

4. Kommunikationsverfahren nach einem der Ansprüche 1 bis 3, wobei die Station umfasst:
ein mit dem ersten SBP-Responder assoziiertes Assoziierungsgerät und
ein Nicht-Assoziierungsgerät, das eine Pre-Association-Sicherheitsverhandlung mit dem ersten SBP-Responder abgeschlossen hat.

5. Kommunikationsverfahren nach Anspruch 4, wobei das Bestimmen des Ziel-Funkframes umfasst:
für den Fall, dass das Nicht-Assoziierungsgerät die Pre-Association-Sicherheitsverhandlung mit dem ersten SBP-Responder abgeschlossen hat, Aufnehmen des von dem Nicht-Assoziierungsgerät unterstützten WLAN-Sensormessparameters in den Ziel-Funkframe;
oder
wobei das Bestimmen des Ziel-Funkframes umfasst:
für den Fall, dass das Nicht-Assoziierungsgerät die Pre-Association-Sicherheitsverhandlung mit dem ersten SBP-Responder abgeschlossen hat, Empfangen eines von einem SBP-Initiator gesendeten dritten Funkframes, wobei der dritte Funkframe anweist, den von dem Nicht-Assoziierungsgerät unterstützten WLAN-Sensormessparameter zu erhalten; und
Aufnehmen des von dem Nicht-Assoziierungsgerät unterstützten WLAN-Sensormessparameters in den Ziel-Funkframe.

6. Kommunikationsverfahren nach einem der Ansprüche 1 bis 5, wobei der Ziel-Funkframe einen Assoziierungsantwortframe oder einen Re-Assoziierungsantwortframe umfasst.

7. Kommunikationsverfahren nach einem der Ansprüche 1 bis 6, ferner umfassend:
Aufnehmen eines ersten Identifikationsbits in einen Beacon-Frame oder in einen Probe-Response-Frame, wobei das erste Identifikationsbit dazu eingerichtet ist, anzuzeigen, dass der erste SBP-Responder die SBP-Sensormessung unterstützt;
und/oder
Aufnehmen eines zweiten Identifikationsbits in einen Assoziierungsantwortframe, wobei das zweite Identifikationsbit dazu eingerichtet ist, anzuzeigen, dass Parameterinformationen der von dem ersten SBP-Responder unterstützten SBP-Sensormessung in dem Beacon-Frame oder in dem Probe-Response-Frame enthalten sind.

8. Kommunikationsverfahren, durchgeführt von einem Sensing-by-Proxy-, SBP-, Initiator, wobei das Verfahren umfasst:
Empfangen (701) eines von einem ersten SBP-Responder gesendeten Ziel-Funkframes, wobei der Ziel-Funkframe Zielparameterinformationen zum Einrichten einer SBP-Sensormessung umfasst, die zumindest von dem ersten SBP-Responder unterstützt wird, und wobei die Zielparameterinformationen einen von einer Station, STA, unterstützten Sensormessparameter für ein drahtloses lokales Netzwerk, WLAN, umfassen, der zumindest dem ersten SBP-Responder entspricht; und
Einleiten (702) eines SBP-Sensormessprozesses mit dem SBP-Responder als Proxy basierend auf den Zielparameterinformationen.

9. Kommunikationsverfahren nach Anspruch 8, wobei die Zielparameterinformationen umfassen:
erste Parameterinformationen zum Einrichten einer SBP-Sensormessung, die von dem ersten SBP-Responder unterstützt wird, und/oder
zweite Parameterinformationen zum Einrichten einer SBP-Sensormessung, die von einem zweiten SBP-Responder unterstützt wird,
wobei der zweite SBP-Responder ein SBP-Responder innerhalb eines Abdeckungsbereichs des ersten SBP-Responders ist.

10. Kommunikationsverfahren nach Anspruch 8 oder 9, wobei die Station umfasst:
ein mit dem ersten SBP-Responder assoziiertes Assoziierungsgerät und
ein Nicht-Assoziierungsgerät, das eine Pre-Association-Sicherheitsverhandlung mit dem ersten SBP-Responder abgeschlossen hat.

11. Kommunikationsverfahren nach Anspruch 10, ferner umfassend:
für den Fall, dass das Nicht-Assoziierungsgerät die Pre-Association-Sicherheitsverhandlung mit dem ersten SBP-Responder abgeschlossen hat, Senden eines dritten Funkframes an den ersten SBP-Responder, wobei der dritte Funkframe dazu eingerichtet ist, den ersten SBP-Responder anzuweisen, den von dem Nicht-Assoziierungsgerät unterstützten WLAN-Sensormessparameter in den Ziel-Funkframe aufzunehmen.

12. Kommunikationsverfahren nach einem der Ansprüche 8 bis 11, ferner umfassend:
Aufnehmen eines dritten Identifikationsbits in einen Assoziierungsanforderungsframe, wobei das dritte Identifikationsbit dazu eingerichtet ist, anzuzeigen, dass der SBP-Initiator die SBP-Sensormessung unterstützt.

13. Elektronische Vorrichtung, die als ein erster Sensing-by-Proxy-, SBP-, Responder dient, wobei die elektronische Vorrichtung ein Bestimmungsmodul (801) und ein Sendemodul (802) umfasst und wobei die elektronische Vorrichtung dazu eingerichtet ist, das Kommunikationsverfahren nach einem der Ansprüche 1 bis 7 durchzuführen.

14. Elektronische Vorrichtung, die als ein Sensing-by-Proxy-, SBP-, Initiator dient, wobei die elektronische Vorrichtung ein Empfangsmodul (901) und ein Ausführungsmodul (902) umfasst und wobei die elektronische Vorrichtung dazu eingerichtet ist, das Kommunikationsverfahren nach einem der Ansprüche 8 bis 12 durchzuführen.

15. Nichtflüchtiges computerlesbares Speichermedium, auf dem ein Computerprogramm gespeichert ist, das bei Ausführung durch einen Prozessor bewirkt, dass das Verfahren nach einem der Ansprüche 1 bis 12 durchgeführt wird.

## Revendications

1. Procédé de communication, mis en œuvre par un premier répondeur de détection par proxy, SBP, le procédé comprenant :
la détermination (101) d'une trame radio cible, ladite trame radio cible comprenant des informations de paramètres cibles pour établir une mesure de détection SBP supportée par au moins le premier répondeur SBP, et lesdites informations de paramètres cibles comprenant un paramètre de mesure de détection pour un réseau local sans fil, WLAN, supporté par une station, STA, correspondant à au moins le premier répondeur SBP ; et
l'émission (102) de la trame radio cible.

2. Procédé de communication selon la revendication 1, dans lequel les informations de paramètres cibles comprennent :
des premières informations de paramètres pour établir une mesure de détection SBP supportée par le premier répondeur SBP, et/ou
des deuxièmes informations de paramètres pour établir une mesure de détection SBP supportée par un deuxième répondeur SBP,
ledit deuxième répondeur SBP étant un répondeur SBP situé dans une zone de couverture du premier répondeur SBP.

3. Procédé de communication selon la revendication 2, ledit procédé comprenant en outre :
l'émission d'une première trame radio vers le deuxième répondeur SBP avant l'émission de la trame radio cible, ladite première trame radio indiquant au deuxième répondeur SBP de renvoyer les deuxièmes informations de paramètres ; et
la réception des deuxièmes informations de paramètres renvoyées par le deuxième répondeur SBP ;
et/ou
la réception d'une deuxième trame radio émise par le deuxième répondeur SBP avant l'émission de la trame radio cible ; et
l'obtention des deuxièmes informations de paramètres comprises dans la deuxième trame radio.

4. Procédé de communication selon l'une quelconque des revendications 1 à 3, dans lequel la station comprend :
un dispositif d'association associé au premier répondeur SBP, et
dispositif non associé ayant terminé une négociation de sécurité pré-association avec le premier répondeur SBP.

5. Procédé de communication selon la revendication 4, dans lequel la détermination de la trame radio cible comprend :
dans le cas où le dispositif non associé a terminé la négociation de sécurité pré-association avec le premier répondeur SBP, l'inclusion du paramètre de mesure de détection WLAN supporté par le dispositif non associé dans la trame radio cible ;
ou
dans lequel la détermination de la trame radio cible comprend :
dans le cas où le dispositif non associé a terminé la négociation de sécurité pré-association avec le premier répondeur SBP, la réception d'une troisième trame radio émise par un initiateur SBP, ladite troisième trame radio indiquant d'obtenir le paramètre de mesure de détection WLAN supporté par le dispositif non associé ; et
l'inclusion du paramètre de mesure de détection WLAN supporté par le dispositif non associé dans la trame radio cible.

6. Procédé de communication selon l'une quelconque des revendications 1 à 5, dans lequel la trame radio cible comprend une trame de réponse d'association ou une trame de réponse de réassociation.

7. Procédé de communication selon l'une quelconque des revendications 1 à 6, comprenant en outre :
l'inclusion d'un premier bit d'identification dans une trame de balise ou dans une trame de réponse à une sonde, ledit premier bit d'identification étant configuré pour indiquer que le premier répondeur SBP supporte la mesure de détection SBP ;
et/ou
l'inclusion d'un deuxième bit d'identification dans une trame de réponse d'association, ledit deuxième bit d'identification étant configuré pour indiquer que des informations de paramètres de la mesure de détection SBP supportée par le premier répondeur SBP sont transportées dans la trame de balise ou dans la trame de réponse à une sonde.

8. Procédé de communication, mis en œuvre par un initiateur de détection par proxy, SBP, le procédé comprenant :
la réception (701) d'une trame radio cible émise par un premier répondeur SBP, ladite trame radio cible comprenant des informations de paramètres cibles pour établir une mesure de détection SBP supportée par au moins le premier répondeur SBP, et lesdites informations de paramètres cibles comprenant un paramètre de mesure de détection pour un réseau local sans fil, WLAN, supporté par une station, STA, correspondant à au moins le premier répondeur SBP ; et
le lancement (702), sur la base des informations de paramètres cibles, d'un processus de mesure de détection SBP avec le répondeur SBP servant de proxy.

9. Procédé de communication selon la revendication 8, dans lequel les informations de paramètres cibles comprennent :
des premières informations de paramètres pour établir une mesure de détection SBP supportée par le premier répondeur SBP, et/ou
des deuxièmes informations de paramètres pour établir une mesure de détection SBP supportée par un deuxième répondeur SBP,
ledit deuxième répondeur SBP étant un répondeur SBP situé dans une zone de couverture du premier répondeur SBP.

10. Procédé de communication selon la revendication 8 ou 9, dans lequel la station comprend :
un dispositif d'association associé au premier répondeur SBP, et
un dispositif non associé ayant terminé une négociation de sécurité pré-association avec le premier répondeur SBP.

11. Procédé de communication selon la revendication 10, comprenant en outre :
dans le cas où le dispositif non associé a terminé la négociation de sécurité pré-association avec le premier répondeur SBP, l'émission d'une troisième trame radio vers le premier répondeur SBP, ladite troisième trame radio étant configurée pour indiquer au premier répondeur SBP d'inclure le paramètre de mesure de détection WLAN supporté par le dispositif non associé dans la trame radio cible.

12. Procédé de communication selon l'une quelconque des revendications 8 à 11, comprenant en outre :
l'inclusion d'un troisième bit d'identification dans une trame de demande d'association, ledit troisième bit d'identification étant configuré pour indiquer que l'initiateur SBP supporte la mesure de détection SBP.

13. Dispositif électronique servant de premier répondeur de détection par proxy, SBP, ledit dispositif électronique comprenant un module de détermination (801) et un module d'émission (802), et ledit dispositif électronique étant configuré pour mettre en œuvre le procédé de communication selon l'une quelconque des revendications 1 à 7.

14. Dispositif électronique servant d'initiateur de détection par proxy, SBP, ledit dispositif électronique comprenant un module de réception (901) et un module d'exécution (902), et ledit dispositif électronique étant configuré pour mettre en œuvre le procédé de communication selon l'une quelconque des revendications 8 à 12.

15. Support non transitoire lisible par ordinateur sur lequel est stocké un programme informatique qui, lorsqu'il est exécuté par un processeur, amène la mise en œuvre du procédé selon l'une quelconque des revendications 1 à 12.
